# EUROPÄISCHE PATENTSCHRIFT

(11) **EP 3 733 393 B1**
(45) Veröffentlichungstag und Bekanntmachung des Hinweises auf die Patenterteilung: **10.11.2021**
(21) Anmeldenummer: 20160602.7
(22) Anmeldetag: 03.03.2020
(51) Int. Cl.: B30B 11/00, B30B 11/08, B30B 15/32

(54) **ABSTREIFEINRICHTUNG UND RUNDLÄUFERPRESSE**
STRIPPING DEVICE AND ROTARY PRESS
DISPOSITIF RACLEUR ET PRESSE ROTATIVE

(30) Priorität: 05.04.2019 DE 102019108969
(43) Veröffentlichungstag der Anmeldung: 04.11.2020
(73) Patentinhaber: Fette Compacting GmbH, 21493 Schwarzenbek (DE)
(72) Erfinder: Kolbe, Sven, 21514 Büchen (DE); Lüdemann, Stefan, 21035 Hamburg (DE)
(74) Vertreter: Hauck Patentanwaltspartnerschaft mbB

(56) Entgegenhaltungen:
- EP-B1- 2 707 207
- CN-C- 100 480 032
- JP-A- H02 243 158
- JP-A- 2015 145 020
- US-A- 2 235 286
- US-A- 2 518 868

## Beschreibung

Die Erfindung betrifft eine Abstreifeinrichtung zum Abstreifen von Presslingen von einer Matrizenscheibe einer Rundläuferpresse, umfassend ein Gehäuse, ein an dem Gehäuse angeordnetes, über der Matrizenscheibe positionierbares Abstreifelement zum Abstreifen von in der Rundläuferpresse hergestellten Presslingen von der Matrizenscheibe, und einen ersten an dem Gehäuse angeordneten Kanalabschnitt zum Abführen von von der Matrizenscheibe abgestreiften Presslingen. Die Erfindung betrifft außerdem eine Rundläuferpresse mit einer solchen Abstreifeinrichtung.

Rundläuferpressen umfassen einen in der Regel um eine vertikale Achse drehend angetriebenen Rotor, der eine obere und eine untere Stempelführung für obere und untere Pressstempel und eine Matrizenscheibe zwischen den Stempelführungen aufweist. Die Pressstempel rotieren gemeinsam mit der Matrizenscheibe und werden im Zuge ihrer Rotation beispielsweise durch Steuerkurven axial bewegt. Neben mindestens einer Füll- und Dosierstation, in der zu verpressendes Material in Aufnahmen der Matrizenscheibe gefüllt wird, und einer Druckstation, in der das in die Aufnahmen gefüllte Material mittels der oberen und unteren Pressstempel zu Presslingen, insbesondere Tabletten, verpresst wird, umfassen derartige Rundläuferpressen auch eine Auswerferstation. In dieser werden die hergestellten Presslinge üblicherweise durch Anheben der Unterstempel auf die Oberseite der Matrizenscheibe gefördert. Ein in Drehrichtung des Rotors nachgeordnetes, ortsfest angeordnetes Abstreifelement streift die auf der rotierenden Matrizenscheibe befindlichen Tabletten von der Matrizenscheibe ab und befördert sie zum Abtransport aus der Rundläuferpresse in einen Ablaufkanal. Derartige Abstreifelemente umfassen in der Regel weiterhin eine Aussortiereinrichtung, beispielsweise eine Aussortierdüse, die aufgrund von Qualitätsmängeln auszusortierende Tabletten beispielsweise mittels gerichteter Druckluft aus dem Tablettenstrom in einen weiteren Ablaufkanal aussortiert.

Mit Rundläuferpressen können Presslinge unterschiedlicher Größe hergestellt werden. Die Abstreifelemente umfassen häufig eine Krümmung, entlang der die Presslinge unter der Wirkung der unter dem ortsfesten Abstreifelement rotierend fortbewegten Matrizenscheibe zu dem Ausgang der Rundläuferpresse geführt werden. Abhängig von der Größe der Tabletten, insbesondere ihrem Durchmesser, oder bei nicht kreisrunder Form, oder einer anderen charakteristischen Abmessung, werden die Abstreifelemente manuell durch eine Bedienperson individuell positioniert, um eine ordnungsgemäße Führung durch das Abstreifelement zu gewährleisten. Auch ein erster Kanalabschnitt, in den auszusortierende Presslinge durch die Aussortiereinrichtung gefördert werden können, kann individuell positioniert werden, um abhängig von dem Presslingsformat einen ausreichenden, aber gleichzeitig möglichst geringen Abstand zwischen der Aussortiereinrichtung und dem ersten Kanalabschnitt zu gewährleisten. Üblicherweise werden das Abstreifelement und gegebenenfalls der erste Kanalabschnitt von der Bedienperson in radialer Richtung in Bezug auf die Matrizenscheibe verschoben, um an unterschiedliche Presslingsabmessungen anzupassen.

Nachteilig an diesem Vorgehen ist, dass nicht zuverlässig sichergestellt werden kann, dass durch die jeweilige Bedienperson eine für die jeweilige Presslingsgröße korrekte Positionierung erfolgt. Dies kann zu einer Beschädigung oder sogar zu einem Bruch der Presslinge durch eine zu starke Belastung beim Abstreifen führen. Da eine Aussortierung von Schlechtpresslingen in Förderrichtung der Presslinge üblicherweise vor dem eigentlichen Abstreifvorgang erfolgt, kann ein erst im Zuge des Abstreifvorgangs beschädigter oder zerbrochene Pressling nicht mehr aussortiert werden, so dass dieser unter Umständen dem Ausgang für ordnungsgemäße Presslinge zugeführt wird.

Um diesen Nachteil zu überwinden, wird in EP 2 707 207 B1 vorgeschlagen, das Abstreifelement mit einer Identifikations- und/oder Positioniereinheit mit Identifikations- und/oder Positionierdaten betreffend das Abstreifelement zu versehen und eine das Abstreifelement umfassende Abstreifeinrichtung mit einer Lese- und/oder Schreibeinheit auszustatten, die dazu ausgebildet ist, die Identifikations- und/oder Positionierdaten aus der Identifikations- und/oder Positioniereinheit auszulesen. Auf diese Weise kann die Einhaltung einer vorgegebenen Position des Abstreifelements automatisiert überprüft werden und es ist möglich zu überprüfen, ob das jeweils eingesetzte Abstreifelement das richtige Abstreifelement für die jeweils zu produzierenden Presslinge ist. Es sind dann insbesondere unterschiedliche Abstreifelemente für unterschiedliche Presslingsformate vorgesehen, die individuell und präzise an das jeweilige Presslingsformat angepasst sind. Auf diese Weise ist eine besonders gute Anpassung an das herzustellende Presslingsformat möglich und es ist eine sichere Überprüfungsmöglichkeit eingerichtet. Allerdings führt das Vorhalten unterschiedlicher Abstreifelemente und gegebenenfalls auch erster Kanalabschnitte zu einem nicht unerheblichen Kostenaufwand, der nicht immer gerechtfertigt ist.

Aus US 2 235 286 A ist eine Rundläufertablettenpresse mit einer Abstreifeinrichtung zum Abstreifen von Tabletten bekannt mit einem über einer Matrizenscheibe positionierbaren Abstreifelement zum Abstreifen von hergestellten Tabletten und einem ersten Kanalabschnitt zum Abführen von abgestreiften Tabletten. Das als Flügel ausgebildete Abstreifelement kann entlang einer Gleitbahn aus einer zurückgezogenen Ruheposition in eine Betriebsposition zum Abstreifen von Tabletten verschoben werden.

Weitere Abstreifeinrichtungen mit individuell positionierbaren Abstreifelementen sind bekannt aus JP 2015/145020 A, US 2 518 868 A, JPH 02 243158 A und CN 100 480 032 C.

Sämtliche der vorgenannten Abstreifeinrichtungen des Standes der Technik weisen wie bereits eingangs erläutert, die mit einer individuellen Positionierung von Abstreifelementen verbundenen Nachteile auf, insbesondere, dass nicht zuverlässig sichergestellt werden kann, dass durch die jeweilige Bedienperson eine für die jeweilige Presslingsgröße korrekte Positionierung erfolgt. Dies kann wie erläutert zu einer Beschädigung oder sogar einem Bruch der Presslinge durch eine zu starke Belastung beim Abstreifen führen.

Ausgehend von dem erläuternden Stand der Technik liegt der Erfindung daher die Aufgabe zugrunde, eine Abstreifeinrichtung und eine Rundläuferpresse der eingangs genannten Art bereitzustellen, mit denen in kostengünstiger Weise eine Beschädigung von Presslingen durch das Abstreifelement vermieden und eine sichere Aussortierung von Schlechttabletten gewährleistet wird.

Die Erfindung löst die Aufgabe durch die Gegenstände der Ansprüche 1 und 13. Vorteilhafte Ausgestaltungen finden sich in den abhängigen Ansprüchen, der Beschreibung und den Figuren.

Für eine Abstreifeinrichtung der eingangs genannten Art löst die Erfindung die Aufgabe dadurch, dass das Abstreifelement und der erste Kanalabschnitt verschiebbar an dem Gehäuse gelagert sind, und dass die Abstreifeinrichtung eine Mehrzahl von alternativ in das Gehäuse einsetzbaren mechanischen Positioniermitteln umfasst, die im in das Gehäuse eingesetzten Zustand jeweils derart mit dem Abstreifelement und dem ersten Kanalabschnitt zusammenwirken, dass das Abstreifelement und der erste Kanalabschnitt in einer durch die jeweiligen mechanischen Positioniermittel vorgegebenen Position an dem Gehäuse angeordnet sind, wobei sich die vorgegebene Position für das Abstreifelement und/oder den ersten Kanalabschnitt für unterschiedliche mechanische Positioniermittel unterscheidet.

Die erfindungsgemäße Abstreifeinrichtung dient zum Abstreifen von Presslingen, insbesondere Tabletten, von einer Matrizenscheibe einer Rundläuferpresse. Bei der Rundläuferpresse kann es sich also insbesondere um eine Rundläufertablettenpresse handeln. Das Abstreifelement der Abstreifeinrichtung ist im an der Rundläuferpresse montierten Zustand der Auswerferstation in Drehrichtung des Rotors der Rundläuferpresse nachgeordnet, wobei das Abstreifelement ortsfest oberhalb der Matrizenscheibe und mit geringem Abstand zu dieser angeordnet ist, so dass in der Auswerferstation auf die Oberseite der Matrizenscheibe ausgeworfene Presslinge durch das Abstreifelement von der unter diesem hindurchdrehenden Matrizenscheibe abgestreift werden. Das Abstreifelement kann zum Beispiel eine Krümmung umfassen, beispielsweise eine sichelförmig Krümmung, entlang der die Presslinge unter der Wirkung der unter dem ortsfesten Abstreifelement rotierend fortbewegten Matrizenscheibe abgestreift werden. Die Abstreifeinrichtung umfasst weiterhin einen ersten an dem Gehäuse angeordneten Kanalabschnitt zum Abführen von durch das Abstreifelement von der Matrizenscheibe abgestreiften Presslingen. Der erste Kanalabschnitt kann mit einem ersten Ablaufkanal zum Abführen der Presslinge aus der Rundläuferpresse verbunden sein. Bei dem ersten Kanalabschnitt kann es sich um einen Schlechtkanalabschnitt handeln, der mit einem sogenannten Schlechtkanal für von einer Sensorik der Rundläuferpresse als nicht qualitätsgemäß erkannte Presslinge verbunden ist. Wie weiter unten noch erläutert, kann die Abstreifeinrichtung dazu eine Aussortiereinrichtung umfassen, die solche als schlecht erkannten Presslinge aus dem Tablettenstrom in den ersten Kanalabschnitt aussortiert bevor diese Presslinge von dem Abstreifelement von der Matrizenscheibe abgestreift werden. Wie ebenfalls weiter unten noch erläutert werden wird, kann die Abstreifeinrichtung außerdem einen dem ersten Kanalabschnitt in Drehrichtung des Rotors nachgeordneten zweiten Kanalabschnitt umfassen, in den die durch das Abstreifelement abgestreiften Presslinge gefördert werden. Dieser zweite Kanalabschnitt kann ebenfalls mit einem Ablaufkanal zum Abführen der Presslinge aus der Rundläuferpresse verbunden sein. Es kann sich in diesem Fall um einen Gutkanalabschnitt handeln, der entsprechend mit einem Gutkanal verbunden ist für als qualitätskonform erkannte Presslinge.

Das Gehäuse der erfindungsgemäßen Abstreifeinrichtung kann säulenartig ausgebildet sein. Es kann sich insbesondere um eine sogenannte Abstreifsäule handeln, die an dem Pressengehäuse der Rundläuferpresse angeordnet ist. Das Abstreifelement und der erste Kanalabschnitt sind insbesondere in Radialrichtung in Bezug auf die Matrizenscheibe verschiebbar an dem Gehäuse gelagert. Sie können insbesondere entlang einer Längsrichtung des ersten Kanalabschnitts verschiebbar an dem Gehäuse gelagert sein. Erfindungsgemäß sind mechanische Positioniermittel vorgesehen, die in das Gehäuse einsetzbar sind. Sie geben mechanisch und (nur) durch ihr Einsetzen in das Gehäuse die Position des Abstreifelements und des ersten Kanalabschnitts eindeutig vor. Dazu wirken sie im in das Gehäuse eingesetzten Zustand mechanisch mit dem Abstreifelement und dem ersten Kanalabschnitt zusammen. Die erforderliche Kraft zur Positionierung von Abstreifelement und erstem Kanalabschnitt kann insbesondere manuell durch eine Bedienperson im Zuge des Einsetzens der Positioniermittel in das Gehäuse aufgebracht werden. Es ist folglich kein separater Antrieb hierfür erforderlich. Die Gefahr einer Fehlpositionierung wird auf diese Weise ausgeschlossen. Erfindungsgemäß sind mehrere mechanische Positioniermittel vorgesehen, die wahlweise und alternativ zueinander in das Gehäuse eingesetzt werden können. Es sind insbesondere mindestens zwei mechanische Positioniermittel vorgesehen, vorzugsweise mehr als zwei mechanische Positioniermittel. Unterschiedliche mechanische Positioniermittel geben unterschiedliche Positionen von Abstreifelement und/oder erstem Kanalabschnitt vor in Bezug auf das Gehäuse der Abstreifeinrichtung bzw. im montierten Zustand in Bezug auf die Matrizenscheibe. Durch Auswahl der für das jeweilige Presslingsformat passenden mechanischen Positioniermittel wird somit in einfacher und zuverlässiger Weise die richtige Position von Abstreifelement und erstem Kanalabschnitt sichergestellt. Es muss weder eine aufwändige und unsichere manuelle Positionierung von Abstreifelement und erstem Kanalabschnitt erfolgen, noch müssen für unterschiedliche Presslingsformate unterschiedliche Abstreifelemente und gegebenenfalls erste Kanalabschnitte vorgehalten werden. Vielmehr kann die Abstreifeinrichtung mit ihrem Abstreifelement und erstem Kanalabschnitt für sämtliche in der jeweiligen Rundläuferpresse hergestellten Presslingsgrößen eingesetzt werden. Durch die zuverlässige Positionierung verhindert die Erfindung in kostengünstiger Weise eine Beschädigung von Presslingen durch das Abstreifelement und gewährleistet eine sichere Aussortierung von Schlechtpresslingen.

Wie bereits erläutert, kann die Abstreifeinrichtung weiterhin einen zweiten an dem Gehäuse angeordneten Kanalabschnitt umfassen. Wie ebenfalls bereits erläutert, kann es sich bei dem zweiten Kanalabschnitt um einen sogenannten Gutkanal für ordnungsgemäße Presslinge, also für von einer Sensorik der Rundläuferpresse als qualitätskonform erkannte Presslinge,handeln.

Der zweite Kanalabschnitt kann nach einer weiteren Ausgestaltung ebenfalls verschiebbar an dem Gehäuse gelagert sein, wobei auch die Position des zweiten Kanalabschnitts durch die Mehrzahl von mechanischen Positioniermitteln vorgegeben wird. Der zweite Kanalabschnitt kann ebenfalls insbesondere in Radialrichtung in Bezug auf die Matrizenscheibe verschiebbar an dem Gehäuse gelagert sein. Er kann insbesondere entlang einer Längsrichtung des zweiten Kanalabschnitts verschiebbar an dem Gehäuse gelagert sein. Die mechanischen Positioniermittel wirken bei dieser Ausgestaltung im in das Gehäuse eingesetzten Zustand auch mit dem zweiten Kanalabschnitt derart mechanisch zusammen, dass der zweite Kanalabschnitt in einer durch die jeweiligen mechanischen Positionsmittel vorgegebenen Position an dem Gehäuse angeordnet ist, wobei die Position sich wiederum für unterschiedliche mechanische Positioniermittel unterscheiden kann. Die in dieser Anmeldung erläuterten Ausgestaltungen betreffend die mechanischen Positioniermittel und ihr Zusammenwirken mit dem Abstreifelement bzw. dem ersten Kanalabschnitt können in entsprechender Weise auch für den zweiten Kanalabschnitt vorgesehen sein. Bei den vorgenannten Ausgestaltungen wird der zweite Kanalabschnitt in vorteilhafter Weise ebenfalls an unterschiedliche Presslingsformate angepasst. Es ist in besonders einfacher Weise auch möglich, den zweiten Kanalabschnitt fest mit dem Abstreifelement zu verbinden, so dass diese beim Einsetzen der mechanischen Positioniermittel in das Gehäuse gemeinsam positioniert werden.

Gemäß einer weiteren Ausgestaltung kann vorgesehen sein, dass in der Rundläuferpresse hergestellte Presslinge durch das Abstreifelement in den zweiten Kanalabschnitt geleitet werden, dass der erste Kanalabschnitt stromauf des zweiten Kanalabschnitts angeordnet ist, und dass das Abstreifelement eine Aussortiereinrichtung aufweist, mit der auszusortierende Pressling in den ersten Kanalabschnitt geleitet werden. Der erste Kanalabschnitt ist insbesondere in Drehrichtung der Matrizenscheibe bzw. Förderrichtung der Presslinge stromauf des zweiten Kanalabschnitts angeordnet. Werden Presslinge nicht von der Aussortiereinrichtung aussortiert, werden sie folglich durch das Abstreifelement in den zweiten Kanalabschnitt abgestreift. Wie bereits erläutert, kann der zweite Kanalabschnitt für ordnungsgemäße Presslinge und der erste Kanalabschnitt für von einer Sensorik der Rundläuferpresse als schlecht erkannte Presslinge vorgesehen sein. Werden Presslinge von der Sensorik als schlecht erkannt, werden diese von der Aussortiereinrichtung in den ersten Kanalabschnitt gefördert, bevor sie von dem Abstreifelement in den zweiten Kanalabschnitt abgestreift werden. Die Aussortiereinrichtung kann eine Aussortierdüse umfassen. Sie leitet auszusortierende Presslinge durch einen gerichteten Druckluftstoß in den ersten Kanalabschnitt, wie dies an sich bekannt ist.

Gemäß einer besonders praxisgemäßen Ausgestaltung können die mechanischen Positioniermittel Positionierstifte umfassen, die im in das Gehäuse eingesetzten Zustand in korrespondierende Stiftaufnahmen von Abstreifelement und erstem Kanalabschnitt eingreifen. Auch ist es möglich, dass Abstreifelement und erster Kanalabschnitt Positionierstifte umfassen, die im in das Gehäuse eingesetzten Zustand in korrespondierende Stiftaufnahmen der mechanischen Positioniermittel eingreifen. Die Positionierstifte können zum Beispiel zylindrische Positionierstifte sein. Die Positionieraufnahmen können entsprechend zylindrische Positionieraufnahmen sein. Indem die Positionierstifte in die Stiftaufnahmen eingreifen, wirken die mechanischen Positioniermittel mechanisch mit dem Abstreifelement und dem ersten Kanalabschnitt zusammen. Es erfolgt eine besonders einfache mechanische Positionierung. Bei unterschiedlichem Positioniermitteln können die Positionierstifte bzw. die Positionieraufnahmen in einfacher Weise an unterschiedlichen Positionen angeordnet sein. Dadurch ergeben sich auch unterschiedliche Positionen von Abstreifelement bzw. erstem Kanalabschnitt.

Nach einer weiteren Ausgestaltung können in die Stiftaufnahmen mündende, sich in Richtung der Stiftaufnahmen verjüngende Einführabschnitte vorgesehen sein. Die Einführabschnitte können sich zum Beispiel kegelstumpfförmig verjüngen. Sie führen beim Einsetzen der Positioniermittel in das Gehäuse seitlich versetzt zu den Positionieraufnahmen ausgerichtete Positionierstifte in die Positionieraufnahmen unter gleichzeitiger Verschiebung des Abstreifelements bzw. des ersten Kanalabschnitts. Es erfolgt somit eine automatische Positionierung des Abstreifelements bzw. des ersten Kanalabschnitts im Zuge des Einsetzens der Positioniermittel in das Gehäuse. Ein manuelles Ausrichten von Abstreifelement und erstem Kanalabschnitt ist hierzu nicht erforderlich.

Nach einer weiteren Ausgestaltung können die mechanischen Positioniermittel jeweils einen in das Gehäuse einsetzbaren Führungsträger aufweisen, an dem die Positionierstifte oder die Positionieraufnahmen ausgebildet sind. Der Führungsträger kann zum Beispiel als Führungsplatte ausgestaltet sein. Der Führungsträger gibt die Position der mechanischen Positioniermittel in dem Gehäuse eindeutig vor. Dadurch ist auch die Position der Positionierstifte oder Positionieraufnahmen und damit die Position von Abstreifelement und erstem Kanalabschnitt eindeutig vorgegeben.

Gemäß einer weiteren Ausgestaltung können das Abstreifelement und der erste Kanalabschnitt jeweils an einem verschiebbar an dem Gehäuse gelagerten Führungsschlitten angeordnet sein. Die Führungsschlitten sind jeweils in einer entsprechenden Aufnahme des Gehäuses verschiebbar gelagert. Auf diese Weise erfolgt eine besonders einfache verschiebbare Lagerung des Abstreifelemente bzw. des ersten Kanalabschnitts an dem Gehäuse.

Die Stiftaufnahmen und gegebenenfalls die sich verjüngenden Einführabschnitte des Abstreifelements und des ersten Kanalabschnitts oder die Positionierstifte des Abstreifelements und des ersten Kanalabschnitts können an den Führungsschlitten ausgebildet sein.

Gemäß einer weiteren Ausgestaltung können die mechanischen Positioniermittel jeweils Identifikationsmittel aufweisen, mit denen sie eindeutig identifizierbar sind. Auf diese Weise ist eine einfache Überprüfbarkeit gegeben, ob die eingesetzten Positioniermittel die richtigen, und damit die Position von Abstreifelement und erstem Kanalabschnitt für das jeweilige Presslingsformat zutreffend ist. Im einfachsten Fall kann es sich um optische Identifikationsmittel handeln, die von einer Bedienperson oder auch automatisch von einer entsprechenden Leseeinrichtung ausgelesen werden können. Beispielhaft genannt sei insoweit eine Beschriftung, ein Barcode, eine Farbcodierung oder ähnliches.

Es ist auch möglich, dass die Identifikationsmittel jeweils einen von einer Leseeinrichtung der Rundläuferpresse auslesbaren RFID-Transponder umfassen. Es ist dann in besonders zuverlässiger Weise eine automatische Auslesbarkeit durch eine Lesereinrichtung der Rundläuferpresse gegeben. Die Leseeinrichtung kann mit der Steuereinrichtung der Rundläuferpresse verbunden sein, die auf Grundlage des Ausleseergebnisses unmittelbar die Richtigkeit der eingesetzten Positioniermittel für das herzustellende Presslingsformat prüfen kann.

Die Erfindung betrifft auch eine Rundläuferpresse mit einer Steuereinrichtung und mit einem Rotor, wobei der Rotor eine obere und eine untere Stempelführung für obere und untere Pressstempel und eine Matrizenscheibe zwischen den Stempelführungen aufweist, wobei die Pressstempel mit Aufnahmen der Matrizenscheibe zusammenwirken, ferner mit mindestens einer Füllstation, in der zu verpressendes Material in die Aufnahmen gefüllt wird, weiterhin mit mindestens einer Druckstation, die im Betrieb mit den oberen Pressstempeln und mit den unteren Pressstempeln zusammenwirkt, so dass diese in den Aufnahmen befindliches Material zu Presslingen verpressen, und mit mindestens einer Auswerferstation, in der die Presslinge aus den Aufnahmen auf die Matrizenscheibe gefördert werden, wobei die Rundläuferpresse mindestens eine erfindungsgemäße Abstreifeinrichtung umfasst.

Die Rundläuferpresse kann im Grundsatz in an sich bekannter Weise ausgestaltet sein. Sie umfasst eine sogenannte Matrizenscheibe mit mehreren Aufnahmen, in denen das zu verpressende Material verpresst wird. Die Aufnahmen können sogenannte Matrizenbohrungen sein. In den Matrizenbohrungen können Matrizenbuchsen angeordnet sein. Dies ist aber nicht zwingend erforderlich, sondern die Pressstempel können auch unmittelbar mit den Matrizenbohrungen zusammenwirken. Die Matrizenscheibe kann im Übrigen einstückig ausgebildet sein oder aus Matrizensegmenten bestehen. Der Rotor wird durch einen Drehantrieb beispielsweise um eine vertikale Achse drehend angetrieben. Bei den mit der Rundläuferpresse hergestellten Presslingen kann es sich um Tabletten handeln. Das zu verpressende Material kann pulverförmig sein. Die erfindungsgemäße Rundläuferpresse kann auch eine Leseeinrichtung zum Auslesen der Identifikationsmittel der mechanischen Positioniermittel umfassen. Diese Leseeinrichtung kann mit der Steuereinrichtung der Rundläuferpresse verbunden sein. Die Steuereinrichtung kann dazu ausgebildet sein, auf Grundlage der Ausleseergebnisse der Leseeinrichtung die Richtigkeit der eingesetzten mechanischen Positioniermittel für das herzustellende Presslingsformat zu überprüfen. Stellt die Steuereinrichtung fest, dass falsche Positioniermittel eingesetzt sind, kann sie zum Beispiel ein Warnsignal ausgeben.

Ausführungsbeispiele der Erfindung werden nachfolgend anhand von Figuren näher erläutert. Es zeigen schematisch:
- Figur 1: eine erfindungsgemäße Rundläuferpresse in einer abgewickelten Darstellung des Rotors,
- Figur 2: eine perspektivische Ansicht einer erfindungsgemäßen Abstreifeinrichtung,
- Figur 3: eine teilweise Darstellung der in Figur 2 gezeigten erfindungsgemäßen Abstreifeinrichtung von oben,
- Figur 4: eine perspektivische Darstellung eines Teils der in Figur 2 gezeigten Abstreifeinrichtung,
- Figur 5: eine weitere perspektivische Ansicht der Darstellung aus Figur 4,
- Figur 6: eine teilweise geschnittene Ansicht der Darstellung aus den Figuren 4 und 5 von oben, und
- Figur 7: mechanische Positioniermittel einer erfindungsgemäßen Abstreifeinrichtung gemäß einem weiteren Ausführungsbeispiel.

Soweit nichts anderes angegeben ist, bezeichnen in den Figuren gleiche Bezugszeichen gleiche Gegenstände.

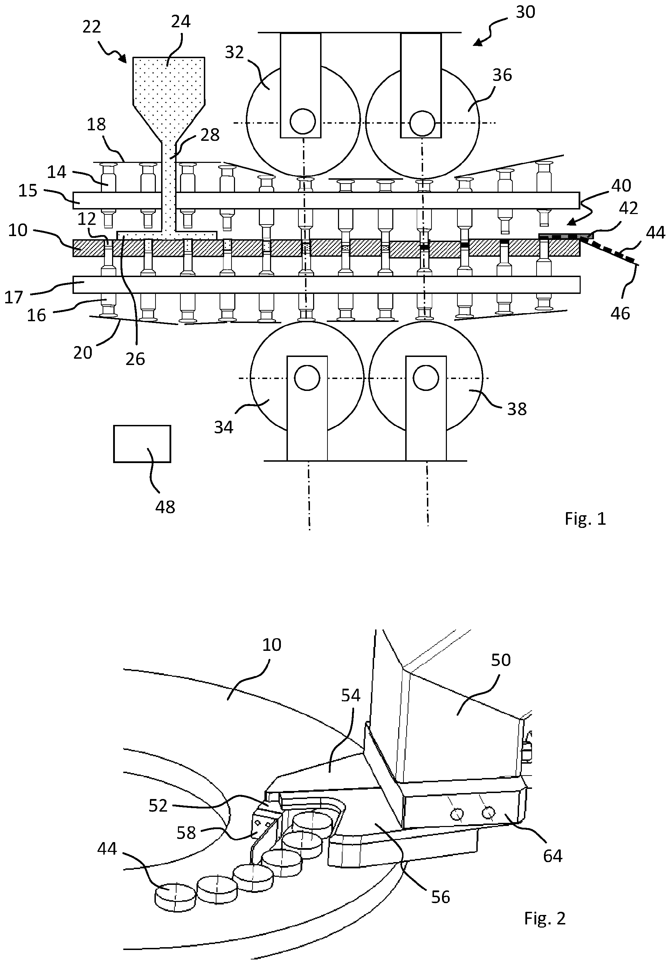

Die in Figur 1 gezeigte Rundläuferpresse, insbesondere Rundläufertablettenpresse, umfasst einen durch einen Drehantrieb drehend angetriebenen Rotor mit einer Matrizenscheibe 10, die eine Mehrzahl von Aufnahmen 12 aufweist. Die Aufnahmen 12 können beispielsweise durch Bohrungen der Matrizenscheibe 10 gebildet sein. Weiter umfasst der Rotor eine Mehrzahl von Oberstempeln 14 und Unterstempeln 16, die mit der Matrizenscheibe 10 synchron umlaufen. Die Oberstempel 14 sind in einer oberen Stempelführung 15 axial geführt und die Unterstempel 16 sind in einer unteren Stempelführung 17 axial geführt. Die axiale Bewegung der Oberstempel 14 und Unterstempel 16 im Zuge der Drehung des Rotors wird durch obere Steuerkurvenelemente 18 und untere Steuerkurvenelemente 20 gesteuert. Die Rundläuferpresse umfasst weiterhin eine Fülleinrichtung 22, die ein Füllreservoir 24 und eine Füllkammer 26 aufweist, die über eine Zuführung 28 verbunden sind. Auf diese Weise gelangt in dem vorliegenden Beispiel pulverförmiges Füllmaterial aus dem Füllresevoir 24 über die Zuführung 28 schwerkraftbedingt in die Füllkammer 26 und aus dieser über eine an der Unterseite der Füllkammer 26 vorgesehene Befüllöffnung wiederum schwerkraftbedingt in die Aufnahmen 12 der Matrizenscheibe 10.

Die Rundläuferpresse umfasst außerdem eine Druckstation 30. Die Druckstation 30 besitzt eine Vorpresseinrichtung mit einer oberen Vordruckrolle 32 und einer unteren Vordruckrolle 34, sowie einer Hauptpresseinrichtung mit einer oberen Hauptdruckrolle 36 und einer unteren Hauptdruckrolle 38. Darüber hinaus umfasst die Rundläuferpresse eine Auswerferstation 40 und eine in Figur 1 sehr schematisch dargestellte Abstreifeinrichtung 42 mit einem Abstreifelement, das die in der Rundläuferpresse hergestellten Presslinge 44, insbesondere Tabletten, einem Ablaufkanal 46 zuführt.

Eine Steuereinrichtung zum Betrieb der Rundläuferpresse ist bei dem Bezugszeichen 48 gezeigt. Die Steuereinrichtung 48 ist über nicht näher dargestellte Leitungen unter anderem mit dem Drehantrieb des Rotors verbunden und steuert die Rundläuferpresse im Betrieb. Die Steuereinrichtung 48 umfasst außerdem eine Leseeinrichtung zum Auslesen von Identifikationsmitteln von mechanischen Positioniermitteln der Abstreifeinrichtung 42, die unten noch näher erläutert werden.

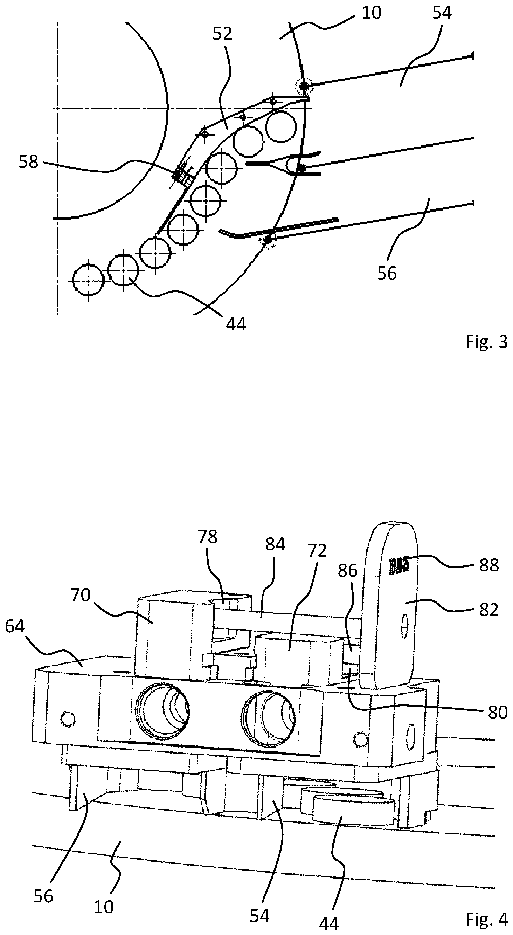

Die in den Figuren 2 bis 6 dargestellte erfindungsgemäße Abstreifeinrichtung weist ein Gehäuse 50 auf, das beispielsweise an einem Pressenrahmen der Rundläuferpresse befestigt ist. In Figur 3 ist das Gehäuse aus Veranschaulichungsgründen nicht dargestellt und in den Figuren 4 bis 6 lediglich teilweise. Die Abstreifeinrichtung 42 umfasst ein im montierten Zustand oberhalb der Matrizenscheibe 10 angeordnetes, in dem gezeigten Beispiel etwa sichelförmiges Abstreifelement 52. Durch das Abstreifelement 52 werden durch die Auswerferstation 40 auf die Oberseite der Matrizenscheibe 10 geförderte Presslinge 44 von der Matrizenscheibe 10 in einen zweiten Kanalabschnitt 54 gefördert. Der zweite Kanalabschnitt 54 ist mit dem Ablaufkanal 46 als Gutkanal zum Abführen von ordnungsgemäß hergestellten Presslingen 44 aus der Rundläuferpresse verbunden. Die Abstreifeinrichtung 42 umfasst darüber hinaus einen ersten Kanalabschnitt 56, der in Drehrichtung des Rotors bzw. Förderrichtung der Presslinge 44 stromauf des zweiten Kanalabschnitts 54 angeordnet ist. Die Abstreifeinrichtung 42 umfasst weiterhin eine Aussortiereinrichtung 58, im gezeigten Beispiel eine Aussortierdüse, durch die beispielsweise von einer Sensorik der Rundläuferpresse als schlecht erkannte Presslinge 44 dem ersten Kanalabschnitt 56 zugeführt werden können. Der erste Kanalabschnitt 56 ist mit einem Schlechtkanal zum Abführen der als schlecht erkannten Presslinge 44 verbunden. Zum Aussortieren sendet die Aussortiereinrichtung 58 in an sich bekannter Weise einen Druckluftstoß aus, der die entsprechenden Presslinge 44 aus dem Strom in den ersten Kanalabschnitt 56 fördert bevor diese von dem Abstreifelement 52 abgestreift werden.

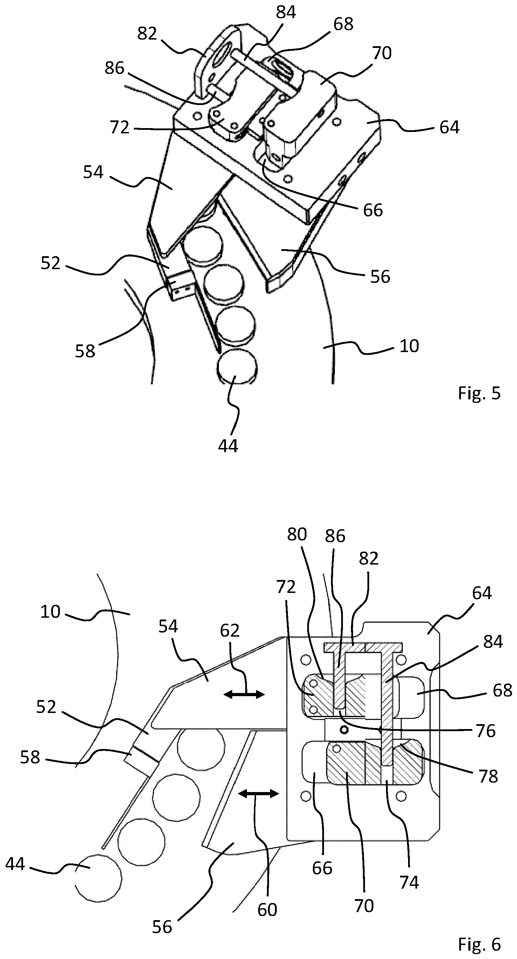

Das Abstreifelement 52 kann fest mit dem zweiten Kanalabschnitt 54 verbunden sein. Der erste Kanalabschnitt 56 und das Abstreifelement 52, und gegebenenfalls mit diesem der zweite Kanalabschnitt 54, sind in dem gezeigten Beispiel in einer im Wesentlichen radial zur Matrizenscheibe 10 verlaufenden Richtung längsverschiebbar an dem Gehäuse 50 gelagert. Auf diese Weise können das Abstreifelement 52 und der erste Kanalabschnitt 56, sowie gegebenenfalls der zweite Kanalabschnitt 54 an unterschiedliche Presslingsformate angepasst werden. Die Bewegungsrichtung des ersten Kanalabschnitts 56 sowie des Abstreifelements 52 gemeinsam mit dem zweiten Kanalabschnitt 54 ist in Figur 6 beispielhaft durch die Pfeile 60, 62 veranschaulicht.

Die Positionierung des Abstreifelements 52 und des ersten Kanalabschnitts 56 soll anhand der Figuren 4 bis 6 näher erläutert werden, wo Teile des Gehäuses 50 zur Veranschaulichung nicht dargestellt sind. Das Gehäuse 50 weist eine Grundplatte 64 auf, in der Führungsaufnahmen 66, 68 vorgesehen sind, in denen jeweils ein Führungsschlitten 70, 72 verschiebbar gelagert ist. Der Führungsschlitten 70 ist mit dem ersten Kanalabschnitt 56 fest verbunden und der zweite Führungsschlitten 72 ist mit dem Abstreifelement 58 und gegebenenfalls dem zweiten Kanalabschnitt 54 fest verbunden. Durch Verschieben der Führungsschlitten 70, 72 in den Führungsaufnahmen 66 bzw. 68 können der erste Kanalabschnitt 56 und das Abstreifelement 52 und gegebenenfalls mit diesem der zweite Kanalabschnitt 54 verschoben werden, wie in Figur 6 durch die Pfeile 60, 62 veranschaulicht. Die Führungsschlitten 70, 72 weisen jeweils eine Stiftaufnahme 74, 76 auf, an deren einer Seite jeweils ein in die Stiftaufnahme 74 bzw. 76 mündender sich in Richtung der Stiftaufnahme 74 bzw. 76 verjüngender Einführabschnitt 78, 80 ausgebildet ist. Die Abstreifeinrichtung 72 umfasst weiterhin mechanische Positioniermittel, die in dem dargestellten Beispiel zwei an einem Führungsträger 82, insbesondere einer Trägerplatte, ausgebildete Positionierstifte 84, 86 umfassen. Die mechanischen Positioniermittel können mit ihrem Führungsträger 82 durch eine Bedienperson in einer eindeutig definierten Position in das Gehäuse 50 eingesetzt und aus diesem entnommen werden. Beim Einsetzen in das Gehäuse 50 werden die Positionierstifte 84, 86 von den Stiftaufnahmen 74 bzw. 76 der Führungsschlitten 70 bzw. 72 aufgenommen. Wie beispielsweise in den Figuren 4 und 5 zu erkennen, befinden sich die Positionierstifte 84, 86 in unterschiedlichen horizontalen Ebenen und besitzen eine unterschiedliche Länge. Außerdem besitzen die Führungsschlitten 70, 72 eine unterschiedliche Höhe, so dass die Positionierstifte 84, 86 durch die Stiftaufnahmen 74 bzw. 76 der Führungsschlitten 70 bzw. 72 aufgenommen werden können, wobei der Positionierstift 84 oberhalb des Führungsschlittens 72 verläuft bis in den dahinter angeordneten Führungsschlitten 70. Durch das mechanische Zusammenwirken der Positionierstifte 84, 86 mit den Stiftaufnahmen 74, 76 wird die Position der Führungsschlitten 70, 72 in den Aufnahmen 66, 68, und damit die Position des ersten Kanalabschnitts 56 sowie des Abstreifelements 58 bzw. des zweiten Kanalabschnitts 54 eindeutig vorgegeben.

Die erfindungsgemäße Abstreifeinrichtung 42 umfasst mehrere derartiger mechanischer Positioniermittel, deren Führungsträger 82 insbesondere jeweils gleich ausgebildet ist, die sich aber in der Anordnung der Positionierstifte 84, 86 derart unterscheiden, dass diese insbesondere in der Draufsicht der Figur 6, also in radialer Richtung in Bezug auf die Matrizenscheibe 10 einen unterschiedlichen Abstand und/oder eine unterschiedliche Position besitzen können. Werden nun beispielsweise die in den Figuren 4 bis 6 gezeigten mechanischen Positioniermittel aus dem Gehäuse 50 entfernt und andere mechanische Positioniermittel mit anders angeordneten Positionierstiften in das Gehäuse 50 eingesetzt, wobei die Position in dem Gehäuse 50 wiederum durch den Führungsträger eindeutig vorgegeben ist, sind die Positionierstifte der anderen mechanischen Positioniermittel zunächst nicht-koaxial zu den Stiftaufnahmen 74 und/oder 76 der sich noch an ihrer vorherigen Position befindlichen Führungsschlitten 70, 72 ausgerichtet. Im Zuge des Einsetzens dieser weiteren mechanischen Positioniermittel kommen die dann anders positionierten Positionierstifte zunächst in Kontakt mit den sich verjüngenden Einführabschnitten 78 bzw. 80. Aufgrund der insbesondere konischen Verjüngung kommt es dabei zu einer Verschiebung der Führungsschlitten 70, 72 derart, dass die zuvor nicht koaxial ausgerichteten Stiftaufnahmen 74, 76 nun koaxial zu den Positionierstiften ausgerichtet sind und die Positionierstifte entsprechend durch die Positionieraufnahmen 74, 76 aufgenommen werden können. Durch die sich dabei ergebende Verschiebung der Führungsschlitten 70, 72 werden entsprechend auch der erste Kanalabschnitt 56 und/oder das Abstreifelement 58 und gegebenenfalls der zweite Kanalabschnitt 54 verschoben. Auf diese Weise erfolgt in einfacher und kostengünstiger Weise eine Anpassung der Position vom ersten Kanalabschnitt 56 sowie Abstreifelement 52 und gegebenenfalls zweitem Kanalabschnitt 54 an beispielsweise ein geändertes Presslingsformat.

In Figur 4 sind Identifikationsmittel der mechanischen Positioniermittel in Form einer Beschriftung 88 zu erkennen. Auf diese Weise kann jederzeit, beispielsweise durch eine Bedienperson optisch überprüft werden, ob die für das jeweilige Presslingsformat richtigen mechanischen Positioniermittel eingesetzt sind.

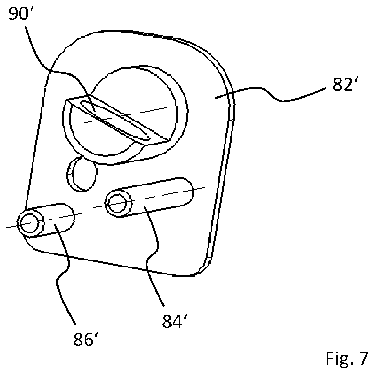

In Figur 7 sind mechanische Positioniermittel nach einem weiteren Ausführungsbeispiel gezeigt. Auch diese mechanischen Positioniermittel umfassen einen Führungsträger 82', insbesondere eine Trägerplatte, an der wiederum zwei Positionierstifte 84', 86' angeordnet sind. Die Funktion der in Figur 7 gezeigten mechanischen Positioniermittel entspricht insoweit der Funktion der zuvor erläuterten mechanischen Positioniermittel. Im Unterschied zu dem vorherigen Ausführungsbeispiel weist der Führungsträger 82' bei dem Ausführungsbeispiel nach Figur 7 eine Aufnahme 90' auf zur Aufnahme eines RFID-Transponders. In diesem RFID-Transponder können Identifikationsdaten zur eindeutigen Identifikation der mechanischen Positioniermittel gespeichert sein. Mittels der Leseeinrichtung der Rundläuferpresse können diese Identifikationsdaten ausgelesen und der Steuereinrichtung 48 zur Verfügung gestellt werden. Es ist dann durch die Steuereinrichtung 48 eine automatische Überprüfung hinsichtlich der Richtigkeit der eingesetzten mechanischen Positioniermittel möglich.

### Bezugszeichenliste

| | |
|---|---|
| Matrizenscheibe | 10 |
| Aufnahmen | 12 |
| Oberstempel | 14 |
| Stempelführung | 15 |
| Unterstempel | 16 |
| Stempelführung | 17 |
| Steuerkurvenelemente | 20 |
| Fülleinrichtung | 22 |
| Füllreservoir | 24 |
| Füllkammer | 26 |
| Zuführung | 28 |
| Druckstation | 30 |
| Obere Vordruckrolle | 32 |
| Untere Vordruckrolle | 34 |
| Obere Hauptdruckrolle | 36 |
| Untere Hauptdruckrolle | 38 |
| Auswerferstation | 40 |
| Abstreifeinrichtung | 42 |
| Presslinge | 44 |
| Ablaufkanal | 46 |
| Steuereinrichtung | 48 |
| Gehäuse | 50 |
| Abstreifelement | 52 |
| Zweiter Kanalabschnitt | 54 |
| Erster Kanalabschnitt | 56 |
| Aussortiereinrichtung | 58 |
| Pfeile | 60, 62 |
| Führungsaufnahmen | 66, 68 |
| Führungsschlitten | 70, 72 |
| Stiftaufnahmen | 74, 76 |
| Einführabschnitte | 78, 80 |
| Führungsträger | 82 |
| Führungsträger | 82' |
| Positionierstifte | 84, 86 |
| Positionierstifte | 84', 86' |
| Beschriftung | 88 |
| Aufnahme | 90' |

## Patentansprüche

1. Abstreifeinrichtung (42) zum Abstreifen von Presslingen (44) von einer Matrizenscheibe (10) einer Rundläuferpresse, umfassend ein Gehäuse (50), ein an dem Gehäuse (50) angeordnetes, über der Matrizenscheibe (10) positionierbares Abstreifelement (52) zum Abstreifen von in der Rundläuferpresse hergestellten Presslingen (44) von der Matrizenscheibe (10), und einen ersten an dem Gehäuse (50) angeordneten Kanalabschnitt (56) zum Abführen von von der Matrizenscheibe (10) abgestreiften Presslingen (44), wobei das Abstreifelement (52) und der erste Kanalabschnitt (56) verschiebbar an dem Gehäuse (50) gelagert sind, **dadurch gekennzeichnet, dass** die Abstreifeinrichtung (42) eine Mehrzahl von alternativ in das Gehäuse (50) einsetzbaren mechanischen Positioniermitteln umfasst, die im in das Gehäuse eingesetzten Zustand jeweils derart mit dem Abstreifelement (52) und dem ersten Kanalabschnitt (56) zusammenwirken, dass das Abstreifelement (52) und der erste Kanalabschnitt (56) in einer durch die jeweiligen mechanischen Positioniermittel vorgegebenen Position an dem Gehäuse (50) angeordnet sind, wobei sich die vorgegebene Position für das Abstreifelement (52) und/oder den ersten Kanalabschnitt (56) für unterschiedliche mechanische Positioniermittel unterscheidet.

2. Abstreifeinrichtung nach Anspruch 1, **dadurch gekennzeichnet, dass** die Abstreifeinrichtung (42) weiterhin einen zweiten an dem Gehäuse (50) angeordneten Kanalabschnitt (54) umfasst.

3. Abstreifeinrichtung nach Anspruch 2, **dadurch gekennzeichnet, dass** der zweite Kanalabschnitt (54) ebenfalls verschiebbar an dem Gehäuse (50) gelagert ist, wobei auch die Position des zweiten Kanalabschnitts (54) durch die Mehrzahl von mechanischen Positioniermitteln vorgegeben wird.

4. Abstreifeinrichtung nach einem der Ansprüche 2 oder 3, **dadurch gekennzeichnet, dass** das Abstreifelement (52) in der Rundläuferpresse hergestellte Presslinge (44) in den zweiten Kanalabschnitt (54) leitet, dass der erste Kanalabschnitt (56) stromauf des zweiten Kanalabschnitts (54) angeordnet ist, und dass das Abstreifelement (52) eine Aussortiereinrichtung (58) aufweist, mit der auszusortierende Presslinge (44) in den ersten Kanalabschnitt (56) geleitet werden können.

5. Abstreifeinrichtung nach einem der vorhergehenden Ansprüche, **dadurch gekennzeichnet, dass** die mechanischen Positioniermittel Positionierstifte (84, 84', 86, 86') umfassen, die im in das Gehäuse (50) eingesetzten Zustand in korrespondierende Stiftaufnahmen (74, 76) von Abstreifelement (52) und erstem Kanalabschnitt (56) eingreifen.

6. Abstreifeinrichtung nach einem der Ansprüche 1 bis 4, **dadurch gekennzeichnet, dass** Abstreifelement (52) und erster Kanalabschnitt (56) Positionierstifte umfassen, die im in das Gehäuse (50) eingesetzten Zustand in korrespondierende Stiftaufnahmen der mechanischen Positioniermittel eingreifen.

7. Abstreifeinrichtung nach einem der Ansprüche 5 oder 6, **dadurch gekennzeichnet, dass** in die Stiftaufnahmen (74, 76) mündende, sich in Richtung der Stiftaufnahmen (74, 76) verjüngende Einführabschnitte (78, 80) vorgesehen sind.

8. Abstreifeinrichtung nach einem der Ansprüche 5 bis 7, **dadurch gekennzeichnet, dass** die mechanischen Positioniermittel jeweils einen in das Gehäuse (50) einsetzbaren Führungsträger (82, 82') aufweisen, an dem die Positionierstifte (84, 84', 86, 86') oder die Positionieraufnahmen ausgebildet sind.

9. Abstreifeinrichtung nach einem der vorhergehenden Ansprüche, **dadurch gekennzeichnet, dass** das Abstreifelement (52) und der erste Kanalabschnitt (56) jeweils an einem verschiebbar an dem Gehäuse (50) gelagerten Führungsschlitten (70, 72) angeordnet sind.

10. Abstreifeinrichtung nach Anspruch 9 und einem der Ansprüche 5 bis 8, **dadurch gekennzeichnet, dass** die Stiftaufnahmen (74, 76) des Abstreifelements (52) und des ersten Kanalabschnitts (56) oder die Positionierstifte des Abstreifelements (52) und des ersten Kanalabschnitts (56) an den Führungsschlitten (70, 72) ausgebildet sind.

11. Abstreifeinrichtung nach einem der vorhergehenden Ansprüche, **dadurch gekennzeichnet, dass** die mechanischen Positioniermittel jeweils Identifikationsmittel aufweisen, mit denen sie eindeutig identifizierbar sind.

12. Abstreifeinrichtung nach Anspruch 11, **dadurch gekennzeichnet, dass** die Identifikationsmittel jeweils einen von einer Leseeinrichtung der Rundläuferpresse auslesbaren RFID Transponder umfassen.

13. Rundläuferpresse mit einer Steuereinrichtung (48) und mit einem Rotor, wobei der Rotor eine obere und eine untere Stempelführung (15, 17) für obere und untere Pressstempel (14, 16) und eine Matrizenschreibe (10) zwischen den Stempelführungen (15, 17) aufweist, wobei die Pressstempel (14, 16) mit Aufnahmen (12) der Matrizenscheibe (10) zusammenwirken, ferner mit mindestens einer Füllstation (22), in der zu verpressendes Material in die Aufnahmen (12) gefüllt wird, weiterhin mit mindestens einer Druckstation (30), die im Betrieb mit den oberen Pressstempeln (14) und mit den unteren Pressstempeln (16) zusammenwirkt, so dass diese in den Aufnahmen (12) befindliches Material zu Presslingen (44) verpressen, und mit mindestens einer Auswerferstation (40), in der die Presslinge (44) aus den Aufnahmen (12) auf die Matrizenscheibe (10) gefördert werden, **dadurch gekennzeichnet, dass** die Rundläuferpresse mindestens eine Abstreifeinrichtung (42) nach einem der vorhergehenden Ansprüche umfasst.

## Claims

1. A scraping apparatus (42) for removing pellets (44) from a die plate (10) of a rotary press, comprising a housing (50), a scraping element (52) that is arranged on the housing (50) and that can be positioned over the die plate (10) for removing pellets (44) produced in the rotary press from the die plate (10), and a first channel section (56) arranged on the housing (50) for guiding away pellets (44) removed from the die plate (10), wherein the scraping element (52) and the first channel section (56) are shiftably mounted on the housing (50), **characterized in that in that** the scraping apparatus (42) comprises a plurality of mechanical positioning means that can be alternatively inserted into the housing (50) and that in each case cooperate with the scraping element (52) and the first channel section (56) when inserted in the housing such that the scraping element (52) and the first channel section (56) are arranged in a position on the housing (50) defined by the respective mechanical positioning means, wherein the defined position for the scraping element (52) and/or the first channel section (56) differ for different mechanical positioning means.

2. The scraping apparatus according to claim 1, **characterized in that** the scraping apparatus (42) further comprises a second channel section (54) arranged on the housing (50).

3. The scraping apparatus according to claim 2, **characterized in that** the second channel section (54) is also shiftably mounted on the housing (50), wherein the position of the second channel section (54) is also defined by means of the plurality of mechanical positioning means.

4. The scraping apparatus according to one of claims 2 or 3, **characterized in that** the scraping apparatus (52) guides pellets (44) produced in the rotary press into the second channel section (54), the first channel section (56) is arranged upstream of the second channel section (54), and the scraping element (52) comprises a discarding apparatus (58) by means of which pellets (44) to be discarded can be guided into the first channel section (56).

5. The scraping apparatus according to one of the preceding claims, **characterized in that** the mechanical positioning means comprise positioning pins (84, 84', 86, 86') that engage in corresponding pin receiving means (74, 76) of the scraping element (52) and first channel section (56) when inserted in the housing (50).

6. The scraping apparatus according to one of claims 1 to 4, **characterized in that** the scraping element (52) and the first channel section (56) comprise positioning pins that engage in corresponding pin receiving means of the mechanical positioning means when inserted into the housing (50).

7. The scraping apparatus according to one of claims 5 or 6, **characterized in that** insertion sections (78, 80) that lead into the pin receiving means (74, 76) and that taper toward the pin receiving means (74, 76) are provided.

8. The scraping apparatus according to one of claims 5 to 7, **characterized in that** the mechanical positioning means each comprise a guide support (82, 82') which can be inserted into the housing (50) and on which the positioning pins (84, 84', 86, 86') or positioning receiving means are formed.

9. The scraping apparatus according to one of the preceding claims, **characterized in that** the scraping element (52) and the first channel section (56) are each arranged on a guide carriage (70, 72) that is shiftably mounted on the housing (50).

10. The scraping apparatus according to claim 9 and one of claims 5 to 8, **characterized in that** the pin receiving means (74, 76) of the scraping element (52) and of the first channel section (56) or the positioning pins of the scraping element (52) and of the first channel section (56) are formed on the guide carriages (70, 72).

11. The scraping apparatus according to one of the preceding claims, **characterized in that** the mechanical positioning means each comprise identification means by means of which they can be clearly identified.

12. The scraping apparatus according to claim 11, **characterized in that** the identification means each comprise an RFID transponder than can be read by a reading apparatus of the rotary press.

13. A rotary press having a control apparatus (48) and having a rotor, wherein the rotor has an upper and a lower punch guide (15, 17) for upper and lower press punches (14, 16) as well as a die plate (10) between the punch guides (15, 17), the press punches (14, 16) cooperating with receiving means (12) of the die plate (10), said rotary press further having at least one filling station (22) in which material to be pressed is filled into the receiving means (12), further having at least one pressing station (30) that cooperates with the upper press punches (14) and lower press punches (16) during operation such that said punches press material located in the receiving means (12) into pellets (44), and having at least one ejection station (40) in which the pellets (44) are conveyed from the receiving means (12) onto the die plate (10), **characterized in that** the rotary press comprises at least one scraping apparatus (42) according to one of the preceding claims.

## Revendications

1. Dispositif racleur (42) pour le raclage de comprimés (44) à partir d'un disque à matrice (10) d'une presse rotative, comportant un boîtier (50), un élément racleur (52) disposé sur le boîtier (50), positionnable au-dessus du disque à matrice (10), pour le raclage de comprimés (44) fabriqués dans la presse rotative à partir du disque à matrice (10), et une première section de canal (56) disposée sur le boîtier (50) pour l'évacuation de comprimés (44) raclés à partir du disque à matrice (10), dans lequel l'élément racleur (52) et la première section de canal (56) sont montés de façon déplaçable sur le boîtier (50), **caractérisé en ce que** le dispositif racleur (42) comporte une pluralité de moyens de positionnement mécaniques aptes à être insérés alternativement dans le boîtier (50), lesquels coopèrent de telle façon avec l'élément racleur (52) et la première section de canal (56) dans l'état inséré dans le boîtier, que l'élément racleur (52) et la première section de canal (56) sont disposés sur le boîtier (50) dans une position prédéfinie par les moyens de positionnement mécaniques respectifs, la position prédéfinie pour l'élément racleur (52) et/ou pour la première section de canal (56) étant différente pour différents moyens de positionnement mécaniques.

2. Dispositif racleur selon la revendication 1, **caractérisé en ce que** le dispositif racleur (42) comporte en outre une deuxième section de canal (54) disposée sur le boîtier (50).

3. Dispositif racleur selon la revendication 2, **caractérisé en ce que** la deuxième section de canal (54) est également montée de façon déplaçable sur le boîtier (50), la position de la deuxième section de canal (54) étant également prédéfinie par la pluralité de moyens de positionnement mécaniques.

4. Dispositif racleur selon l'une des revendications 2 ou 3, **caractérisé en ce que** l'élément racleur (52) guide des comprimés (44) fabriqués dans la presse rotative vers la deuxième section de canal (54), **en ce que** la première section de canal (56) est disposée en amont de la deuxième section de canal (54), et **en ce que** l'élément racleur (52) présente un dispositif de tri (58) permettant de guider des comprimés (44) à trier vers la première section de canal (56).

5. Dispositif racleur selon l'une des revendications précédentes, **caractérisé en ce que** les moyens de positionnement mécaniques comportent des broches de positionnement (84, 84', 86, 86'), lesquelles s'engagent dans des logements de broches (74, 76) correspondants de l'élément racleur (52) et de la première section de canal (56) dans l'état inséré dans le boîtier (50).

6. Dispositif racleur selon l'une des revendications 1 à 4, **caractérisé en ce que** l'élément racleur (52) et la première section de canal (56) comportent des broches de positionnement, lesquelles s'engagent dans des logements de broches des moyens de positionnement mécaniques dans l'état inséré dans le boîtier (50).

7. Dispositif racleur selon l'une des revendications 5 ou 6, **caractérisé en ce qu'**il est prévu des sections d'insertion (78, 80) s'affinant dans la direction des logements de broches (74, 76) et débouchant sur les logements de broches (74, 76).

8. Dispositif racleur selon l'une des revendications 5 à 7, **caractérisé en ce que** les moyens de positionnement mécaniques présentent respectivement un support de guidage (82, 82') insérables dans le boîtier (50), sur lequel sont formé(e)s les broches de positionnement (84, 84', 86, 86') ou les logements de positionnement.

9. Dispositif racleur selon l'une des revendications précédentes, **caractérisé en ce que** l'élément racleur (52) et la première section de canal (56) sont respectivement disposés sur un chariot de guidage (70, 72) monté de façon déplaçable sur le boîtier (50).

10. Dispositif racleur selon la revendication 9 et l'une des revendications 5 à 8, **caractérisé en ce que** les logements de broches (74, 76) de l'élément racleur (52) et de la première section de canal (56) ou les broches de positionnement de l'élément racleur (52) et de la première section de canal (56) sont formé(e)s sur les chariots de guidage (70, 72).

11. Dispositif racleur selon l'une des revendications précédentes, **caractérisé en ce que** les moyens de positionnement mécaniques présentent respectivement des moyens d'identification permettant d'identifier ceux-ci de façon univoque.

12. Dispositif racleur selon la revendication 11, **caractérisé en ce que** les moyens d'identification comportent respectivement un transpondeur RFID lisible par un dispositif de lecture de la presse rotative.

13. Presse rotative dotée d'un dispositif de commande (48) et d'un rotor, dans laquelle le rotor présente des guides de poinçons supérieurs et inférieurs (15, 17) pour des poinçons de compression supérieurs et inférieurs (14, 16) ainsi qu'un disque à matrice (10) entre les guides de poinçons (15, 17), dans laquelle les poinçons de compression (14, 16) coopèrent avec des logements (12) du disque à matrice (10), en outre dotée d'au moins une station de remplissage (22) dans laquelle du matériau à comprimer est introduit dans les logements (12), en outre dotée d'au moins une station de pression (30) coopérant avec les poinçons de compression supérieurs (14) et avec les poinçons de compression inférieurs (16) pendant le fonctionnement, de telle façon que ceux-ci compriment du matériau situé dans les logements (12) en comprimés (44), et dotée d'au moins une station d'éjection (40) dans laquelle les comprimés (44) sont transportés vers le disque à matrice (10) à partir des logements (12), **caractérisée en ce que** la presse rotative comporte au moins un dispositif racleur (42) selon l'une des revendications précédentes.
